# EUROPÄISCHE PATENTSCHRIFT

(11) **EP 3 280 824 B1**
(45) Veröffentlichungstag und Bekanntmachung des Hinweises auf die Patenterteilung: **12.06.2019**
(21) Anmeldenummer: 16730677.8
(22) Anmeldetag: 01.04.2016
(51) Int. Cl.: C21C 5/46, C21C 5/32, F27D 3/16

(54) **KONVERTER**
CONVERTER
CONVERTISSEUR

(30) Priorität: 08.04.2015 DE 102015105307
(43) Veröffentlichungstag der Anmeldung: 14.02.2018
(73) Patentinhaber: SMS group GmbH, 40237 Düsseldorf (DE)
(72) Erfinder: NÖRTHEMANN, Ralf, 45549 Sprockhövel (DE)
(74) Vertreter: Klüppel, Walter
(86) Internationale Anmeldenummer: PCT/DE2016/100155
(87) Internationale Veröffentlichungsnummer: WO 2016/162016

(56) Entgegenhaltungen:
- EP-A1- 0 071 755
- DE-C2- 3 390 501

## Beschreibung

Bei der Herstellung von Stahl im Elektrolichtbogenofen, kurz EAF genannt, bei der hauptsächlich Feststoffe zum Einsatz kommen, ist es bekannt, während der Einschmelzphase für den Schrott zusätzliche Erdgasbrenner einzusetzen. Dies trägt dazu bei, den Bedarf an elektrischer Energie erheblich zu senken.

Seit einiger Zeit kommen dabei sog. SIS- Einheiten (SMS= Siemag Injektionssysteme) zum Einsatz.

Hierbei handelt es sich um sogenannte Injektor - Brennerkombinationen zum Brennen, Eintrag von Sauerstoff und ggf. zum Einblasen von Kohlenstoff durch die Seitenwände des EAF.

Die Injektoren werden in zwei Modi gefahren, und zwar dem Brenner-Modus und dem Injektor- Modus.

Im Brenner-Modus unterstützt eine leistungsstarke Flamme das Einschmelzen des Schrotts in den relativ kalten Bereichen des Ofens, also im Wesentlichen außerhalb der Ofenmitte. Während des Schmelzens, und zwar in der sogenannten Flachbadphase, werden die Brenner in den Injektor-Modus umgeschaltet.

Hierbei wird ein konzentrierter Sauerstoffstrahl mit Überschallgeschwindigkeit in den Ofen eingeblasen, wodurch sich eine optimale Wechselwirkung zwischen Sauerstoff und Schmelze einstellt, die maßgeblich für die schnelle Entkohlung des Stahls ist.

Anders ist die Herstellung von Stahl im Konverter im BOF-(Basic Oxygen Furnace) oder AOD

(Argon Oxygen Decarburisation) Betrieb wie in EP0071755 A1 beschrieben.

Zur Zeit werden an Konvertern zum Einbringen von Sauerstoff in das Bad Sauerstoffblaslanzen eingesetzt. Diese befinden sich oberhalb des Konverters und werden dann von oben in den birnenförmigen Innenraum eingefahren.

Beim Einsatz von Sauerstofflanzen muss eine enorme Bauhöhe oberhalb des Konverters vorgesehen werden. Das benötigt ein hohes Investitionsvolumen bei Neubauten für die Stahlwerkshalle.

Der Erfindung liegt die Aufgabe zugrunde, insbesondere die Investitionskosten für Konverterstahlwerke zu senken.

Gelöst wird diese Aufgabe erfindungsgemäß mit einem Konverter zur Herstellung von Stahl im Blasverfahren aus einem im Wesentlichen flüssigen Einsatzstoff, insbesondere Roheisen, der dadurch gekennzeichnet ist,
- dass zum Frischen des Roheisens anstelle einer durch die obere Konverteröffnung einführbaren Sauerstofflanze und im Boden des Konverters angeordneter Bodendüsen mehrere in dessen Seitenwand über den Konverterinnenumfang verteilte, auf den Badspiegel ausgerichtete, Injektoren vorgesehen sind,
- dass die Injektoren als Überschalldüse ausgebildet sind, die von einer einen Hüllgasstrahl bildenden Ringdüse umgeben sind,
- dass die Injektoren unter einem Winkel von max. 43° zur Badoberfläche ausgerichtet sind,
- dass durch die Überschalldüse Sauerstoff und durch die Ringdüse ein Gemisch von Druckluft und Erdgas einleitbar ist und
- dass der Strahlimpuls für den durch die Überschalldüse zugeführten Sauerstoffstrahl derart bemessen ist, dass ein Eindringen des Sauerstoffstrahls in das Schmelzbad gewährleistet ist.

Vorzugsweise sind die Injektoren umschaltbar auf einen Brennerbetrieb mit langer Flamme und einen Injektorbetrieb mit konzentriertem Sauerstoffstrahl und hohem Auftreffimpuls.

Die sich aus dieser Konverterausbildung und - fahrweise ergebenden Vorteile sind darin zu sehen, dass der Konverter in allen Stahlwerkshallen mit vergleichsweise niedriger Bauhöhe installierbar ist.

Damit ist auch die Möglichkeit zur Umrüstung von EAF-Stahlwerken in BOF-Werke gegeben.
Das Investitionsvolumen der Lanze ist im Vergleich zur Seitenwandinjektion mit SIS - Injektoren ebenfalls sehr hoch.

Diese Vorteile sind von besonderer Bedeutung für Erzeugungsländer, bei denen DRI und HBI zumindest zeitweise kaum zur Verfügung stehen und daher vermehrt auf den Einsatzstoff Roheisen aus dem Hochofen gesetzt werden musst. Die EAF-Hallen sind niedrig. Genau für diesen Einsatzfall ist bei Wegfall der Blaslanze auch ein Einsatz des SIS-Konverters von Interesse, denn bei Einsatz von großen Roheisenmengen ist nun mal der Konverter das bessere Aggregat.

Grundsätzlich kann die erfindungsgemäße Anordnung auch zusätzlich zu der Anwendung einer Sauerstofflanze und Bodendüsen angewandt werden, um deren Vorteile ergänzend auszunutzen.

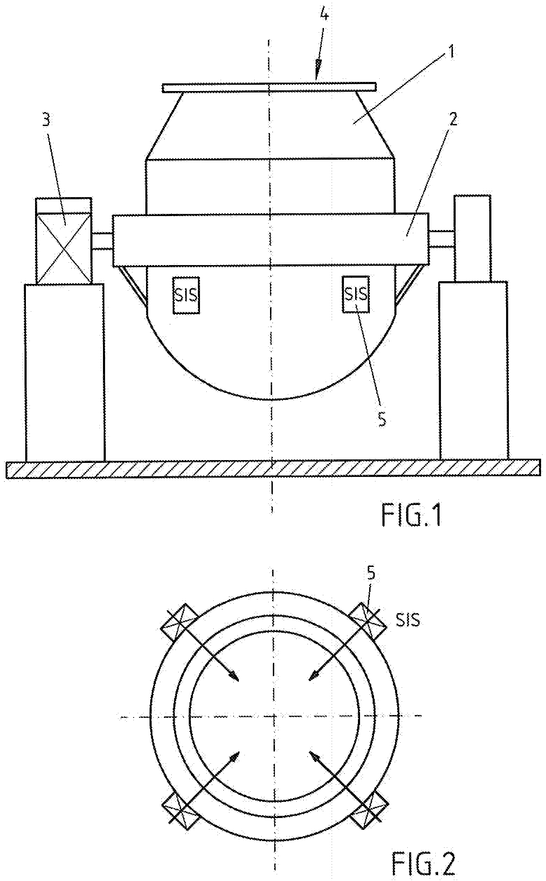

Die Erfindung soll nachfolgend mit Bezug auf die Zeichnung erläutert werden.

In der Zeichnung ist schematisch ein Konverter in der Seitenansicht und im Querschnitt dargestellt.

In bekannter Weise ist das birnenförmige Konvertergefäß 1 - von einem Tragring 2 gehalten - seitlich gelagert, wobei in die seitliche Lagerung ein Kippantrieb 3 integriert ist. Üblicherweise wird durch die obere Öffnung 4 des Konverters eine - hier nicht dargestellte - Sauerstofflanze eingefahren, durch die der zum Frischen der Roheisenschmelze notwendige Sauerstoff eingebracht wird.

Erfindungsgemäß wird nun diese Eintragart von Sauerstoff ersetzt durch in die Seitenwand des Konvertergefäßes, über den Umfang verteilt, eingebaute Injektoren 5, durch die der benötigte Sauerstoff in das Innere des Konverters - oberhalb des Badspiegels - eingebracht werden kann.

## Patentansprüche

1. Konverter zur Herstellung von Stahl im Blasverfahren aus einem im Wesentlichen flüssigen Einsatzstoff, insbesondere Roheisen,
**dadurch gekennzeichnet,**
- **dass** zum Frischen des Roheisens anstelle einer durch die obere Konverteröffnung einführbaren Sauerstofflanze und im Boden des Konverters angeordneter Bodendüsen mehrere in dessen Seitenwand über den Konverterinnenumfang verteilte, auf den Badspiegel ausgerichtete, Injektoren vorgesehen sind,
- **dass** die Injektoren als Überschall - Laval - Düse ausgebildet sind, die von einer einen Hüllgasstrahl bildenden Ringdüse umgeben sind,
- **dass** die Injektoren unter einem Winkel von max. 43° zur Badoberfläche ausgerichtet sind,
- **dass** durch die Überschalldüse Sauerstoff und durch die Ringdüse ein Gemisch von Druckluft und Erdgas einleitbar ist und
- **dass** die Überschallgeschwindigkeit größer als 1.5x Schallgeschwindigkeit ist und der Strahlimpuls für den durch die Überschalldüse zugeführten Sauerstoffstrahl derart bemessen ist, dass ein Eindringen des Sauerstoffstrahls in das Schmelzbad gewährleistet ist.

2. Konverter nach Anspruch 1,
**dadurch gekennzeichnet,**
**dass** die Injektoren umschaltbar auf einen Brennerbetrieb mit langer Flamme und einen Injektorbetrieb mit konzentrierten Sauerstoffstrahl und hohem Auftreffimpuls fahrbar sind.

3. Konverter nach einem der vorstehenden Ansprüche,
**dadurch gekennzeichnet,**
**dass** die Einbauhöhe der Injektoren bis zu maximal ca. 2m über der Badoberfläche beträgt.

4. Konverter nach einem der vorstehenden Ansprüche,
**dadurch gekennzeichnet,**
**dass** die Injektoren zusätzlich zur Anwendung einer Sauerstofflanze und Bodendüsen angewandt werden.

## Claims

1. Converter for producing steel in the blowing process from a substantially liquid raw material, particular pig iron,
**characterised in that**
- for oxidising the pig iron there is provided, instead of an oxygen lance introducible through the upper converter opening and base nozzles arranged in the base of the converter, a plurality of injectors which are distributed in the side wall thereof over the converter inner circumference and oriented towards the bath surface,
- the injectors are constructed as supersonic Laval nozzle surrounded by an annular nozzle forming an envelope gas jet,
- the injectors are oriented towards the bath surface at an angle of at most 43°,
- oxygen is introducible through the supersonic nozzle and a mixture of compressed air and natural gas is introducible through the annular nozzle and
- the supersonic speed is greater than 1.5 x speed of sound and the jet momentum for the oxygen jet supplied by the supersonic nozzle is dimensioned in such a way that penetration of the oxygen jet into the melt bath is guaranteed.

2. Converter according to claim 1, **characterised in that** the injectors are operable to be switchable over between burner operation with longer flame and injector operation with concentrated oxygen jet and high incidence momentum.

3. Converter according to one of the preceding claims, **characterised in that** the height of installation of the injectors is up to at most approximately 2 m above the bath surface.

4. Converter according to any one of the preceding claims, **characterised in that** the injectors are used additionally to the use of an oxygen lance and base nozzles.

## Revendications

1. Convertisseur pour la production d'acier dans un procédé de soufflage à partir d'une matière à traiter essentiellement liquide, en particulier de la fonte brute, **caractérisé**
- **en ce que**, pour l'affinage de la fonte brute, au lieu d'une lance d'oxygène que l'on peut introduire à travers l'ouverture supérieure du convertisseur et au lieu de buses de base disposées dans le fond du convertisseur, on prévoit plusieurs injecteurs répartis dans la paroi latérale du convertisseur sur la périphérie interne de ce dernier, orientés sur la surface du bain ;
- **en ce que** les injecteurs sont réalisés sous la forme de buses de Laval du type à fréquence supersonique qui sont entourées par une buse annulaire formant un jet gainant ;
- **en ce que** les injecteurs sont orientés en direction de la surface du bain en formant un angle de maximum 43° ;
- **en ce qu'**on peut introduire, via la buse supersonique, de l'oxygène et via la buse annulaire, un mélange d'air sous pression et de gaz naturel ;
- **en ce que** la vitesse supersonique est supérieure à 1,5 x la vitesse du son et l'impulsion du jet pour le jet d'oxygène acheminé à travers la buse ultrasonique est mesurée d'une manière telle que l'on garantit une pénétration du jet d'oxygène dans le bain de fusion.

2. Convertisseur selon la revendication 1, **caractérisé en ce que** les injecteurs sont mobiles en pouvant passer par commutation à une exploitation de type brûleur à grande flamme et à une exploitation de type injecteur avec un jet d'oxygène concentré et une impulsion d'impact élevée.

3. Convertisseur selon l'une quelconque des revendications précédentes, **caractérisé en ce que** la hauteur de montage des injecteurs s'élève jusqu'à un maximum d'environ 2 m au-dessus de la surface du bain.

4. Convertisseur selon l'une quelconque des revendications précédentes, **caractérisé en ce que** les injecteurs sont en outre utilisés pour l'application d'une lance à oxygène et de buses de base.
